# EUROPEAN PATENT APPLICATION

(11) **EP 4 549 874 A1**
(43) Date of publication of application: **07.05.2025**
(21) Application number: 23831169.0
(22) Date of filing: 16.06.2023
(51) Int. Cl.: G01B 11/30, G01C 7/04

(54) **ELECTRONIC DEVICE, CONTROL METHOD, AND CONTROL PROGRAM**

(30) Priority: 28.06.2022 JP 2022104011
(71) Applicant: Kyocera Corporation, Kyoto-shi, Kyoto 612-8501 (JP)
(72) Inventor: YAMAMOTO, Takashi, Kyoto-shi, Kyoto 612-8501 (JP)
(74) Representative: Viering, Jentschura & Partner mbB Patent- und Rechtsanwälte
(86) International application number: PCT/JP2023/022477
(87) International publication number: WO 2024/004723

(57) **Abstract**

An electronic device (100) includes an acquiring unit (131) configured to acquire point cloud data corresponding to points on a road surface, a cloth simulation unit (134) configured to output a shape of a point cloud indicated by the point cloud data determined based on a shape of a virtual cloth when the virtual cloth is put on the point cloud data with a predetermined gravity, a clustering unit (135) configured to perform clustering on the point cloud based on the shape of the point cloud, and a determiner (136) configured to determine unevenness of the clustered point cloud. A cloth simulation unit (134) determines a shape of the point cloud based on a distance between a first cloth lattice point when the virtual cloth is put on the point cloud data from a first direction and a second cloth lattice point when the virtual cloth is put on the point cloud data from a second direction. A clustering unit (135) performs clustering on the point cloud other than the points determined to be the road surface. A determiner (136) determines unevenness of the point cloud based on the number of unevenness determinations assigned to the clustered point cloud.

## Description

### TECHNICAL FIELD

The present application relates to an electronic device, a control method, and a control program.

### BACKGROUND OF INVENTION

A technique for recognizing surrounding obstacles is known. Patent Document 1 discloses a technique of selecting points on a floor surface using a detected plane parameter of the floor surface and recognizing an obstacle based on the points. Patent Document 2 discloses that a degree of unevenness of a road surface is calculated based on input information from the road surface to a vehicle.

### CITATION LIST

### PATENT LITERATURE

Patent Document 1: JP 2003-269937 A
Patent Document 2: JP 2020-013537 A

### SUMMARY

### PROBLEM TO BE SOLVED

It is desirable that an autonomously traveling mobile body or the like travels while avoiding not only surrounding objects but also small objects, steps, holes, and the like. However, when a camera mounted on a mobile body is used, it is difficult to determine an edge or the like of unevenness from an image, and there is room for improvement in improving the accuracy of detecting unevenness from an image.

### SOLUTION TO PROBLEM

An electronic device according to an aspect includes: an acquiring unit configured to acquire point cloud data corresponding to points on a road surface; a cloth simulation unit configured to output a shape of a point cloud indicated by the point cloud data determined based on a shape of a virtual cloth when the virtual cloth having a predetermined tensile force is put on the point cloud data with a predetermined gravity; a clustering unit configured to perform clustering on the point cloud based on the shape of the point cloud; and a determiner configured to determine unevenness of the clustered point cloud, wherein the cloth simulation unit is configured to determine the shape of the point cloud based on a distance between a first cloth lattice point when the virtual cloth is put on the point cloud data from a first direction and a second cloth lattice point when the virtual cloth is put on the point cloud data from a second direction opposite to the first direction, the clustering unit is configured to perform clustering on the point cloud other than a point determined to be the road surface, and the determiner is configured to determine the unevenness of the point cloud based on the number of unevenness determinations assigned to the clustered point cloud.

A control method according to an aspect includes: by an electronic device, acquiring point cloud data corresponding to points on a road surface; performing a cloth simulation for outputting a shape of a point cloud indicated by the point cloud data determined based on a shape of a virtual cloth when the virtual cloth having a predetermined tensile force is put on the point cloud data with a predetermined gravity; performing clustering on the point cloud based on the shape of the point cloud; and determining unevenness of the clustered point cloud, wherein the cloth simulation includes determining the shape of the point cloud based on a distance between a first cloth lattice point when the virtual cloth is put on the point cloud data from a first direction and a second cloth lattice point when the virtual cloth is put on the point cloud from a second direction opposite to the first direction, the clustering includes performing clustering on the point cloud other than a point determined to be the road surface, and the determining includes determining the unevenness of the point cloud based on the number of unevenness determinations assigned to the clustered point cloud.

A control program according to an aspect causes an electronic device to execute: acquiring point cloud data corresponding to points on a road surface; performing a cloth simulation for outputting a shape of a point cloud indicated by the point cloud data determined based on a shape of a virtual cloth when the virtual cloth having a predetermined tensile force is put on the point cloud data with a predetermined gravity; performing clustering on the point cloud based on the shape of the point cloud; and determining unevenness of the clustered point cloud, wherein the cloth simulation causes the electronic device to determine the shape of the point cloud based on a distance between a first cloth lattice point when the virtual cloth is put on the point cloud data from a first direction and a second cloth lattice point when the virtual cloth is put on the point cloud data from a second direction opposite to the first direction, the clustering causes the electronic device to perform clustering on the point cloud other than a point determined to be the road surface, and the determining causes the electronic device to determine the unevenness of the point cloud based on the number of unevenness determinations assigned to the clustered point cloud.

### BRIEF DESCRIPTION OF THE DRAWINGS

FIG. 1 is a diagram for explaining an overview of an electronic device according to an embodiment.
FIG. 2 is a diagram illustrating an example of a configuration of the electronic device according to the embodiment.
FIG. 3 is a flowchart illustrating an example of a processing procedure executed by the electronic device according to the embodiment.
FIG. 4 is a diagram illustrating an example of detection data and point cloud data.
FIG. 5 is a flowchart illustrating an example of generation processing of the point cloud data illustrated in FIG. 3.
FIG. 6 is a flowchart illustrating an example of a cloth simulation illustrated in FIG. 3.
FIG. 7 is a diagram for explaining an algorithm of the cloth simulation illustrated in FIG. 6.
FIG. 8 is a diagram illustrating an example of a simulation result of a point cloud and a virtual cloth.
FIG. 9 is a view for explaining point cloud data used in the cloth simulation illustrated in FIG. 6.
FIG. 10 is a flowchart illustrating an example of an unevenness determination illustrated in FIG. 3.
FIG. 11 is a diagram illustrating an example of provision data of the electronic device according to the embodiment.
FIG. 12 is a diagram for explaining an example of unevenness detection of the point cloud data of the electronic device according to the embodiment.
FIG. 13 is a diagram for explaining an example of processing the cloth simulation illustrated in FIG. 12 for each virtual cloth.
FIG. 14 is a diagram for explaining an erroneous determination of unevenness in FIG. 13.
FIG. 15 is a diagram for explaining an example of processing the cloth simulation illustrated in FIG. 12 for each virtual cloth.

### DESCRIPTION OF EMBODIMENTS

A plurality of embodiments for implementing an electronic device, a control method, a control program, and the like according to the present application will be described in detail with reference to the drawings. Note that the following description is not intended to limit the present invention. Constituent elements in the following description include those that can be easily assumed by a person skilled in the art, those that are substantially identical to the constituent elements, and those within a so-called range of equivalents. In the following description, the same reference signs may be assigned to the same constituent elements. Redundant description may be omitted.

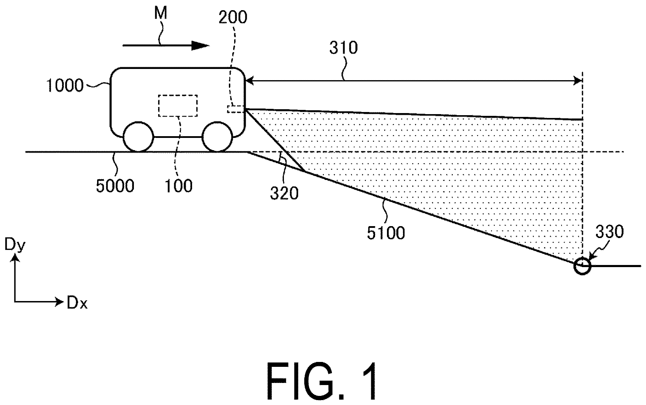

FIG. 1 is a diagram for explaining an overview of an electronic device according to an embodiment. An electronic device 100 illustrated in FIG. 1 is mounted on a mobile body 1000 capable of at least one of autonomous traveling and manual traveling. The mobile body 1000 includes, for example, a vehicle, a robot, a truck, a railroad, and a flying object that can be launched and landed. The mobile body 1000 includes a detector 200 capable of detecting the surroundings in the moving direction. In FIG. 1, a direction Dx is a traveling direction of the mobile body 1000. A direction Dy is a gravity direction intersecting the direction Dx, and is a height direction.

The detector 200 includes, for example, a depth camera, an electric scanning radar, or light detection and ranging or laser imaging detection and ranging (LiDAR). The detector 200 emits, for example, pulsed laser light and measures reflected light of the laser light to measure the range, direction, and the like of the target. The detector 200 irradiates a road surface 5000 on which the mobile body 1000 travels with laser light, measures reflected light reflected by the road surface 5000, a target on the road surface 5000, or the like, and supplies detection data indicating a measurement result of a detection range 310 to the electronic device 100, the mobile body 1000, or the like. The detection range 310 includes a range in which unevenness on the road surface 5000 needs to be detected. The detection range 310 includes a range in which the course in front of the mobile body 1000, the surrounding environment, and the like need to be detected. The detection range 310 includes a range calculated or set from road surface conditions such as the speed of the mobile body 1000 and the slipperiness of the road surface 5000. A climbable angle 320 includes an angle at which the mobile body 1000 can climb up a slope without rubbing the bottom. When the mobile body 1000 is a vehicle, the climbable angle 320 can be calculated from the height from the road surface 5000 to the bottom of the vehicle and the wheel base width. A minimum altitude 330 includes an altitude that is reached when the climbable angle 320 continues over the entire detection range 310. The minimum altitude 330 can be calculated from the detection range 310 and the climbable angle 320. The mobile body 1000 can recognize an obstacle, a target, or the like on the basis of the detection result of the detector 200.

The electronic device 100 is configured to be able to communicate with the mobile body 1000 in a wireless or wired manner, and obtains the measurement result of the detector 200 via the mobile body 1000. The electronic device 100 has a function of estimating the self-position and the surrounding map of the mobile body 1000 by using the measurement result of the detector 200, for example, by a simultaneous localization and mapping (SLAM) method. The surrounding map can be expressed by, for example, point cloud data. The point cloud data has information on three-dimensional coordinates and colors. The electronic device 100 can estimate the likelihood of the estimated self-position based on the estimated surrounding map and the amount of movement of the mobile body 1000.

In the example illustrated in FIG. 1, the electronic device 100 acquires a measurement result obtained by measuring the front of the mobile body 1000 in a traveling direction M with the detector 200. In this case, the road surface 5000 in the traveling direction M of the mobile body 1000 has a slope 5100. The electronic device 100 may determine that the slope 5100 is a "road surface on which the vehicle can travel" because the slope 5100 is a slope at an angle at which the vehicle can climb. The electronic device 100 may detect a recess in the road surface 5000 or the slope 5100 if the recess is at a level at which a tire is likely to get stuck. When the recess is deep, there is a possibility that reflected light cannot be measured and may become missing, and the electronic device 100 may determine that there is a high likelihood that the recess is a dangerous place for the mobile body 1000.

The road surface 5000 includes an object on which the mobile body 1000 moves, such as a surface of a road or a surface of a floor. The electronic device 100 acquires point cloud data capable of identifying the state of the road surface 5000 from the measurement result measured by the detector 200. When the slope 5100 of the road surface 5000 is deep, the detector 200 may not be able to measure the reflected light. In this case, the point cloud data acquired by the electronic device 100 is data in which a point cloud of a deep portion of the slope 5100 is missing. That is, the deep part of the slope 5100 is a hole or the like in the road surface 5000, and is highly likely to be a dangerous part of the road surface 5000 where the movement of the mobile body 1000 on the road surface 5000 is dangerous. Therefore, the electronic device 100 according to the present embodiment provides a technique for improving the accuracy of determining the slope 5100 around the mobile body 1000.

### Configuration Example of Electronic Device

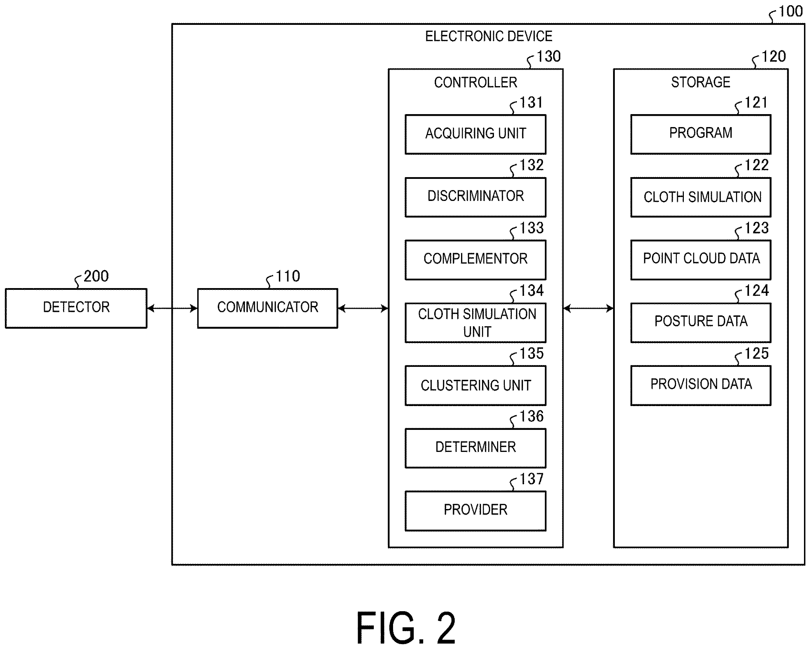

FIG. 2 is a diagram illustrating an example of a configuration of the electronic device 100 according to the embodiment. As illustrated in FIG. 2, the electronic device 100 includes a communicator 110, a storage 120, and a controller 130. The controller 130 is electrically connected to the communicator 110, the storage 120, and the like. The electronic device 100 may have another configuration.

The communicator 110 can communicate with, for example, the mobile body 1000, other telecommunication equipment, or the like. The communicator 110 can support various communication standards. The communicator 110 can transmit and receive various kinds of data via, for example, a wired or wireless network. The communicator 110 can supply the received data to the controller 130. The communicator 110 can transmit data to a transmission destination instructed by the controller 130.

The storage 120 can store programs and data. The storage 120 is also used as a work area for temporarily storing a processing result of the controller 130. The storage 120 may include any non-transitory storage media such as solid-state storage media and magnetic storage media. The storage 120 may include a plurality of types of storage media. The storage 120 may include a combination of a portable storage medium such as a memory card, an optical disc, or a magneto-optical disk, and a storage medium reading device. The storage 120 may include a storage device used as a temporary storage area such as a random access memory (RAM).

The storage 120 can store various kinds of data such as a program 121, a cloth simulation 122, point cloud data 123, posture data 124, and provision data 125. The program 121 causes the controller 130 to execute a function of determining a recessed portion of the road surface 5000 or the slope 5100. The cloth simulation 122 is a program capable of executing a cloth simulation method of estimating a shape of the point cloud data 123 from a cloth shape in a case where the point cloud data 123 is covered with a cloth having a predetermined tensile force with a predetermined gravity and outputting an estimation result. The cloth simulation 122 may be included in the program 121 or may be stored in an external storage or the like. The point cloud data 123 is data indicating the shape of the road surface 5000 or the like detected by the detector 200 as a point cloud. The posture data 124 is data capable of identifying the posture of the detector 200 or the mobile body 1000. The posture data 124 is, for example, data acquired at a predetermined timing such as at the time of setting or at the start of processing. The provision data 125 includes a determination result determined by the electronic device 100 and data capable of identifying a recessed portion or the like of the road surface 5000 or the slope 5100.

The controller 130 is an arithmetic processing device. Examples of the arithmetic processing device include, but are not limited to, a central processing unit (CPU), a system-on-a-chip (SoC), a micro control unit (MCU), a field-programmable gate array (FPGA), and a coprocessor. The controller 130 can realize various functions by integrally controlling the operation of the electronic device 100.

Specifically, the controller 130 can execute a command included in the program 121 stored in the storage 120 while referring to data stored in the storage 120, as necessary. Then, the controller 130 controls functional units in accordance with data and commands, thereby realizing various functions. The functional units include, for example, the communicator 230, but are not limited thereto.

The controller 130 includes functional units such as an acquiring unit 131, a discriminator 132, a complementor 133, a cloth simulation unit 134, a clustering unit 135, a determiner 136, and a provider 137. The controller 130 realizes functions of the acquiring unit 131, the discriminator 132, the complementor 133, the cloth simulation unit 134, the clustering unit 135, the determiner 136, the provider 137, and the like by executing the program 121. The program 121 is a program for causing the controller 130 of the electronic device 100 to function as the acquiring unit 131, the discriminator 132, the complementor 133, the cloth simulation unit 134, the clustering unit 135, the determiner 136, and the provider 137.

The acquiring unit 131 acquires point cloud data 123 indicating a set of points at which the state of the road surface 5000 can be identified. The acquiring unit 131 acquires the point cloud data 123 generated based on the depth image of the detection data from the detector 200, the posture data of the mobile body 1000, and the like. The acquiring unit 131 may acquire the point cloud data 123 generated outside the electronic device 100. The acquiring unit 131 stores the acquired point cloud data 123 in the storage 120.

In the detection range 310 of the point cloud data 123, the discriminator 132 discriminates a missing part of the point cloud data 123 which is equal to or lower than the height of the road surface 5000. The missing part of the point cloud data 123 is a recessed portion of the road surface 5000 or the slope 5100. The discriminator 132 discriminates whether or not a point cloud is missing in the point cloud data 123. The discriminator 132 associates the point cloud data 123 with missing data capable of identifying a missing part in the point cloud data 123.

The complementor 133 complements a missing part of the point cloud data 123 with a pseudo point cloud at a position at a predetermined depth from the road surface 5000. The complementor 133 calculates the minimum altitude 330 calculated from the detection range 310 of the point cloud data 123 and the climbable angle 320 of the mobile body 1000. The complementor 133 complements the missing part with a pseudo point cloud having a height lower than the calculated minimum altitude 330. The complementor 133 complements the missing part with a pseudo point cloud having a depth that can be sufficiently regarded as a recessed portion of the road surface 5000 or the slope 5100.

The cloth simulation unit 134 outputs information capable of identifying a shape of the point cloud data 123 from a cloth shape when a virtual cloth having a predetermined tensile force is put on the point cloud data 123 with a predetermined gravity. By executing the cloth simulation 122, the cloth simulation unit 134 connects a first point which is the highest in the height direction among a plurality of points included in the point cloud indicated by the point cloud data 123 and a second point which is lower than the first point in the height direction (direction Dy illustrated in FIG. 1) around the first point to form a bendable virtual cloth shape, and outputs the shape of the point cloud data 123. The cloth simulation unit 134 may output the shape of the point cloud data 123 by connecting a certain point and points around the certain point among a plurality of points included in the point cloud indicated by the point cloud data 123 to form a bendable virtual cloth shape by executing the cloth simulation 122.

The clustering unit 135 performs clustering on the point cloud based on the shape of the point cloud indicated by the generated point cloud data 123, the point cloud data 123 obtained by complementing the pseudo point cloud, and the like. For example, the clustering unit 135 performs clustering on a point cloud other than the points determined as the road surface 5000. For example, the clustering unit 135 performs clustering on the point cloud data 123 into a cluster of unevenness or the like. For example, in a case where the point cloud data 123 has a plurality of unevennesses, the clustering unit 135 performs clustering into clusters for each of the plurality of unevennesses. The clustering unit 135 stores the determination result of the clustering in the storage 120 in association with the point cloud data 123.

The determiner 136 determines the unevenness of the clustered point cloud. The determiner 136 determines the unevenness of the point cloud based on, for example, the number of unevenness determinations assigned to the clustered point cloud. The determiner 136 stores the decision result of determining the unevenness of the point cloud in the storage 120 in association with the point cloud data 123.

The provider 137 provides the provision data 125 capable of identifying the recessed portion and the protruding portion 5200 of the road surface 5000 or the slope 5100 determined by the determiner 136. The provider 137 can provide the provision data 125 to the mobile body 1000 via the communicator 110. Thus, the mobile body 1000 can move while changing the route so as to avoid the recessed portion of the road surface 5000 or the slope 5100 indicated by the provision data 125. The provider 137 may provide the provision data 125 to a display device, a smartphone, or the like.

The functional configuration example of the electronic device 100 according to the present embodiment has been described above. Note that the configuration described above with reference to FIG. 2 is merely an example, and the functional configuration of the electronic device 100 according to the present embodiment is not limited to this example. The functional configuration of the electronic device 100 according to the present embodiment can be flexibly modified in accordance with specifications and operation.

### Processing Procedure Example of Electronic Device

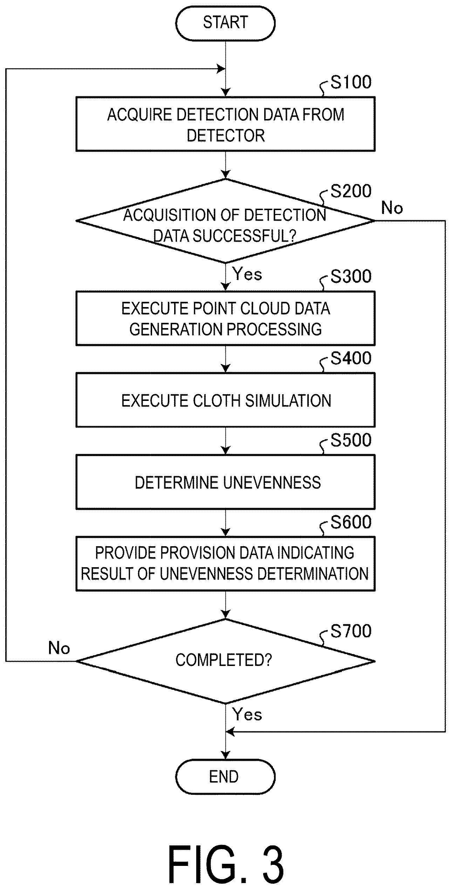

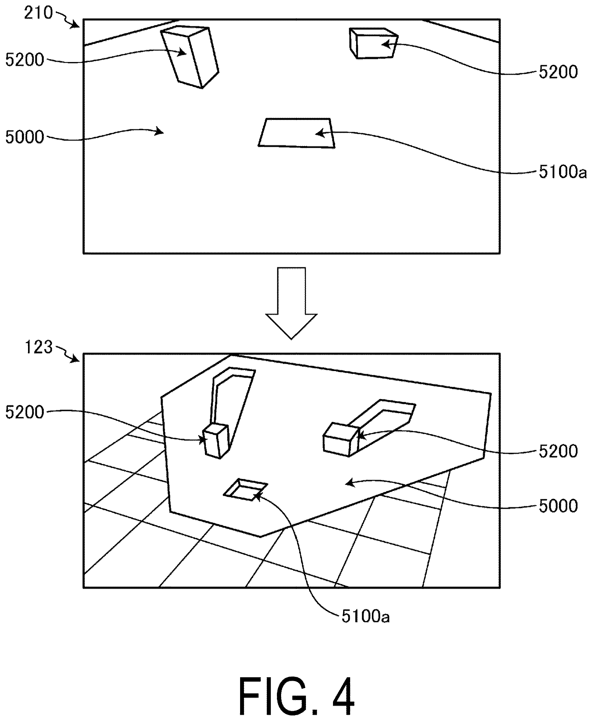

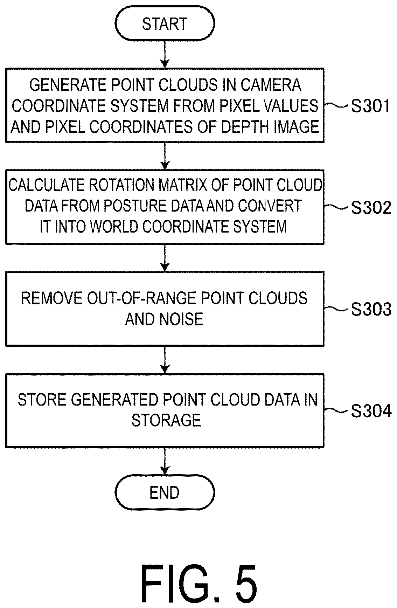

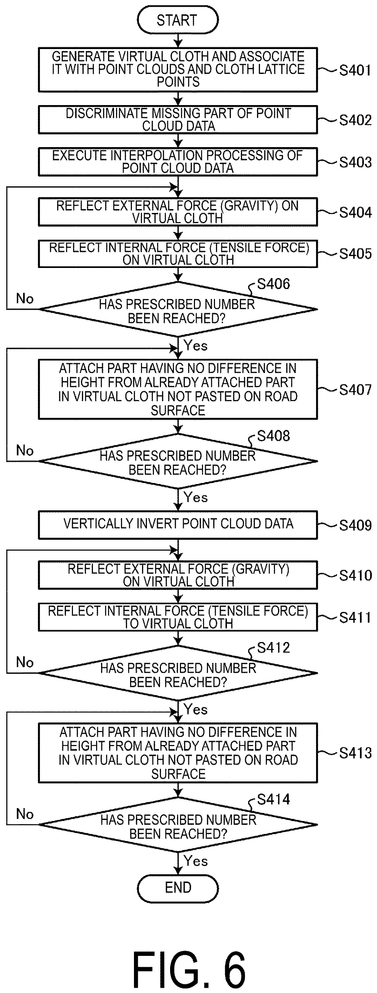

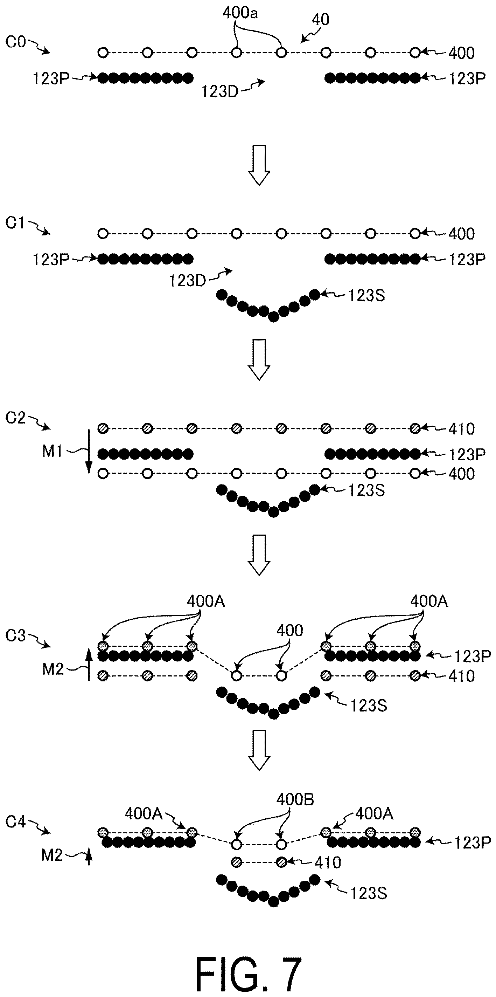

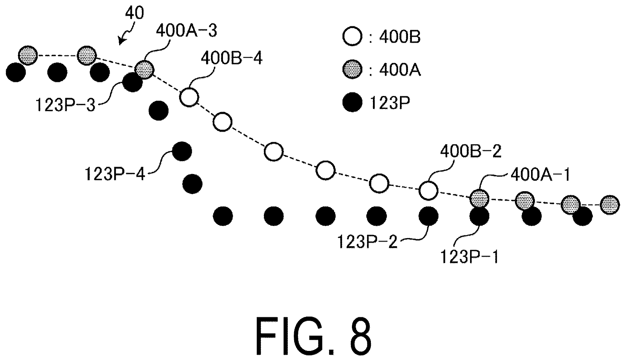

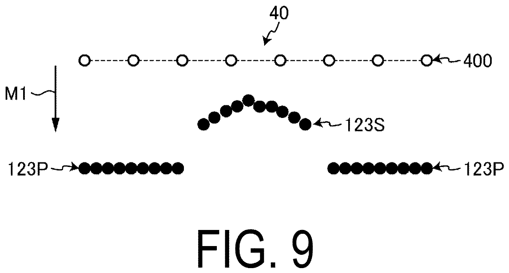

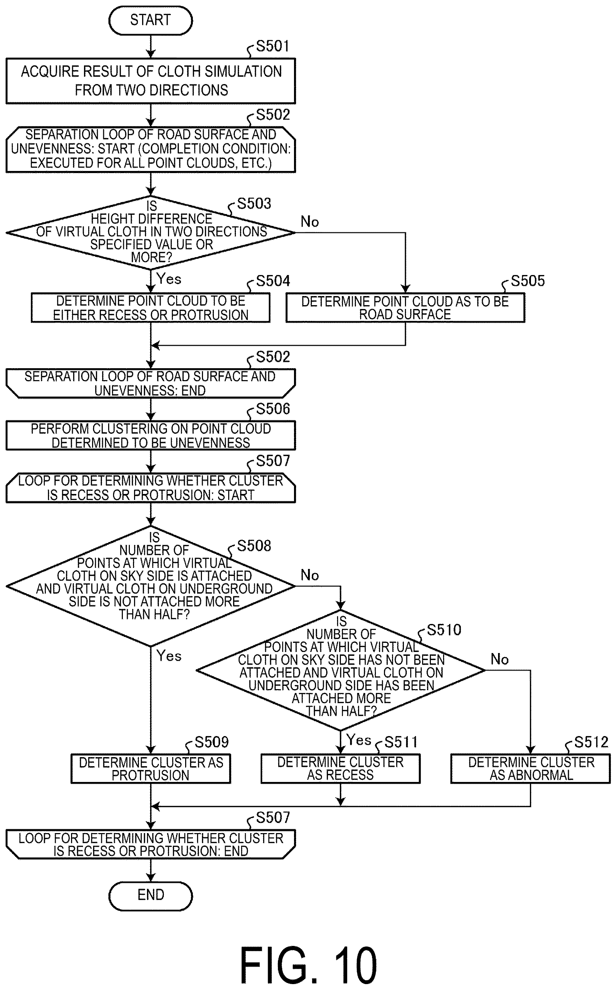

FIG. 3 is a flowchart illustrating an example of a processing procedure executed by the electronic device 100 according to the embodiment. FIG. 4 is a diagram illustrating an example of detection data and point cloud data. FIG. 5 is a flowchart illustrating an example of processing of generating the point cloud data 123 illustrated in FIG. 3. FIG. 6 is a flowchart illustrating an example of the cloth simulation illustrated in FIG. 3. FIG. 7 is a diagram for explaining an algorithm of the cloth simulation illustrated in FIG. 6. FIG. 8 is a diagram illustrating an example of a simulation result of a point cloud 123P and the virtual cloth 40. FIG. 9 is a diagram for explaining point cloud data used in the cloth simulation illustrated in FIG. 6. FIG. 10 is a flowchart illustrating an example of the unevenness determination illustrated in FIG. 3. The processing procedures illustrated in FIGs. 3, 5, 6, and 10 are realized by the controller 130 of the electronic device 100 executing the program 121.

As illustrated in FIG. 3, the controller 130 of the electronic device 100 acquires detection data 210 from the detector 200 (step S100). For example, the controller 130 acquires the detection data 210 from the detector 200 of the mobile body 1000 via the communicator 110. In the present embodiment, as illustrated in FIG. 4, the controller 130 acquires detection data 210 including a depth image obtained by capturing an image in front of the mobile body 1000. In the example illustrated in FIG. 4, the detection data 210 includes a depth image obtained by capturing the recessed portion 5100a existing on the road surface 5000 in the vicinity of the mobile body 1000 and two protruding portions 5200 existing on the road surface 5000 in front of the recessed portion 5100a. Returning to FIG. 3, the controller 130 stores the acquired detection data 210 in the storage 120, and in a case where the detection data 210 cannot be acquired, stores the fact that the data cannot be acquired in the storage 120. When the processing of step S100 is completed, the controller 130 advances the processing to step S200.

The controller 130 determines whether or not the acquisition of the detection data 210 is successful (step S200). For example, when the storage 120 stores the latest detection data 210, the controller 130 determines that the acquisition of the detection data 210 has succeeded. When the controller 130 determines that the acquisition of the detection data 210 is not successful (No in step S200), the processing procedure illustrated in FIG. 3 is completed. Note that the processing procedure illustrated in FIG. 3 may be a processing procedure for executing the processing of acquiring the detection data 210 again in step S100 when the acquisition of the detection data 210 is not successful.

When the controller 130 determines that the acquisition of the detection data 210 is successful (Yes in step S200), the processing proceeds to step S300. The controller 130 executes processing of generating the point cloud data 123 (step S300). For example, the controller 130 converts the depth image into the point cloud data 123 by performing known coordinate conversion on the depth image indicated by the acquired detection data 210.

For example, as illustrated in FIG. 5, the controller 130 generates a point cloud in the camera coordinate system from the pixel value and the pixel coordinates (x, y) of the depth image (step S301). Then, the controller 130 calculates a rotation matrix of the point cloud data 123 from the posture data 124 in the storage 120, and converts the rotation matrix into a world coordinate system (step S302). The world coordinate system is one of a coordinate system used in the field of three-dimensional computer graphics or the like, and defines the coordinate system of the entire space by XYZ-axes in order to represent the position and movement of an object in a three-dimensional space. Then, the controller 130 removes out-of-range point clouds and noise in the point cloud data 123 (step S303). For example, the controller 130 reduces the number of point clouds to be processed by removing the point clouds outside the range of the detection range 310 and noise. In the example illustrated in FIG. 4, the point cloud data 123 is a perspective view of a road surface 5000 having the recessed portion 5100a and two protruding portions 5200. In this case, in the point cloud data 123, the point cloud of the recessed portion 5100a is missing. Returning to FIG. 5, the controller 130 stores the generated point cloud data 123 in the storage 120 (step S304). When the processing procedure illustrated in FIG. 5 is completed, the controller 130 returns to step S300 illustrated in FIG. 3 and advances the processing to step S400.

The controller 130 executes the cloth simulation (step S400). For example, the controller 130 performs the cloth simulation on the point cloud data 123 by executing the cloth simulation 122 in the storage 120.

For example, as illustrated in FIG. 6, the controller 130 generates a virtual cloth and associates the point cloud with the cloth lattice points (step S401). The virtual cloth is a virtual cloth having a size capable of covering the point cloud of the point cloud data 123, and has a plurality of lattice points arranged in a matrix. When generating the virtual cloth, the controller 130 sets the surface hardness of the point cloud corresponding to each cloth lattice point of the virtual cloth.

The controller 130 discriminates a missing part 123D of the point cloud data 123 (step S402). For example, in a case where the point cloud of the point cloud data 123 is covered with the virtual cloth, the controller 130 discriminates a place where the cloth lattice point of the virtual cloth is not associated with the point cloud as the missing part 123D.

For example, as illustrated in a scene C0 in FIG. 7, the point cloud data 123 includes a plurality of point clouds 123P. In order to simplify the description, FIG. 7 illustrates a cross section of some of the plurality of point clouds 123P of the point cloud data 123. In this case, the controller 130 arranges a virtual cloth 40 so as to cover the plurality of point clouds 123P, and associates cloth lattice points 400 with the point clouds 123P of the point cloud data 123. For example, when the virtual cloth 40 is brought into contact with the point cloud data 123, the controller 130 determines that a portion of cloth lattice points 400a which are not in contact the with point clouds 123P is the missing part 123D of the point cloud data 123.

Returning to FIG. 6, the controller 130 stores the determination result in the storage 120 in association with the point cloud data 123, and the processing proceeds to step S403. The controller 130 executes the complementation processing of the point cloud data 123 (step S403). For example, the controller 130 complements the missing part 123D of the point cloud data 123 with the pseudo point clouds 123S by executing interpolation processing. For example, when the missing part 123D of the point cloud data 123 is discriminated, the controller 130 determines the height of the point cloud to be interpolated based on the detection range 310, the climbable angle 320, and the minimum altitude 330 illustrated in FIG. 1. The height of the point cloud to be complemented is determined from detection requirements, vehicle requirements, and the like so as to be lower than the minimum altitude 330.

For example, as illustrated in the scene C0 in FIG. 7, in a case where the point cloud data 123 has the missing part 123D, the controller 130 determines the height of the point clouds to be complemented to the missing part 123D, and complements the point cloud data 123 with the pseudo point clouds 123S of the height. As a result, as illustrated in a scene C1 in FIG. 7, the controller 130 complements the point cloud data 123 with the pseudo point cloud 123S having a depth at which the missing part 123D can be sufficiently determined to be the slope 5100 (recessed portion 5100a).

Returning to FIG. 6, when the controller 130 complements the missing part 123D of the point cloud data 123 with the pseudo point clouds 123S, the processing proceeds to step S404. When it is discriminated in step S402 described above that the missing part 123D does not exist in the point cloud data 123, the controller 130 skips the processing of step S403 and advances the processing to step S404.

The controller 130 reflects the external force (gravity) on the virtual cloth 40 (step S404). For example, as illustrated in a scene C2 in FIG. 7, the controller 130 moves the cloth lattice points 400 of the virtual cloth 40 from start points 410 toward a direction M1 (gravity direction) to below the point clouds 123P. Then, as illustrated in the scene C3 in FIG. 7, when the cloth lattice points 400 of the virtual cloth 40 become lower than the point clouds 123P, the controller 130 moves the cloth lattice points 400A associated with the point clouds 123P indicating the road surface 5000 among the cloth lattice points 400 of the virtual cloth 40 from the start points 410 toward a direction M2 to the upper surface of the point clouds 123P. In this case, the controller 130 does not move the cloth lattice points 400 of the virtual cloth 40 that are not associated with the point clouds 123P indicating the road surface 5000. Returning to FIG. 6, when the processing of step S404 is completed, the controller 130 advances the processing to step S405.

The controller 130 reflects the internal force (tensile force) on the virtual cloth 40 (step S405). For example, the controller 130 reflects the pulling force between the plurality of cloth lattice points 400 of the virtual cloth 40. The tensile force is fixed at a value at which the slope 5100, which is an object to be detected, can be detected. For example, as illustrated in a scene C4 in FIG. 7, the controller 130 moves the cloth lattice points 400 of the virtual cloth 40 which are not associated with the point clouds 123P from the start points 410 toward the direction M2 according to the tensile force. As a result, the controller 130 obtains a portion which is not attached to the point clouds 123P, that is, cloth lattice points 400B which are not attached to the road surface 5000 indicated by the point clouds 123P, among the cloth lattice points 400 of the virtual cloth 40 from one side (sky side). The controller 130 discriminates the plurality of cloth lattice points 400 into the cloth lattice points 400A attached to the road surface 5000 and the cloth lattice points 400B not attached to the road surface 5000. Returning to FIG. 6, when the processing of step S405 is completed, the controller 130 advances the processing to step S406.

The controller 130 determines whether or not a predetermined number of times has been reached (step S406). For example, in the cloth simulation, in a case of a steep slope, a wall, or the like, the virtual cloth 40 may not completely fall to the road surface 5000. For this reason, the controller 130 determines that the prescribed number of times has been reached when the prescribed number of times for executing the cloth simulation from two directions is set and the number of times of execution matches the prescribed number of times. In a case where it is determined that the predetermined number of times has not been reached (No in step S406), the controller 130 returns the processing to step S404 described above and continues the processing. When the controller 130 determines that the predetermined number of times has been reached (Yes in step S406), the processing proceeds to step S407.

The controller 130 attaches a portion of the virtual cloth 40 that has not been attached to the road surface 5000 and that has no difference in height from the already attached portion (step S407). For example, it is assumed that the controller 130 obtains a simulation result of the point clouds 123P and the virtual cloth 40 as illustrated in FIG. 8. In this case, the controller 130 determines that the cloth lattice point 400B-2 adjacent to the already fixed cloth lattice point 400A-1 may be fixed to the actual measurement value since the point cloud 123P-1 and the point cloud 123P-2 indicating the heights of the road surfaces being compared have almost the same height. The controller 130 determines that the cloth lattice point 400B-4 adjacent to the already fixed cloth lattice point 400A-3 should not be fixed to the actual measurement value because there is a difference between the point cloud 123P-3 and the point cloud 123P-4 indicating the heights of the road surfaces being compared. Returning to FIG. 6, when the processing result for the underground side of the road surface 500 is stored in the storage 120, the controller 130 advances the processing to step S408.

The controller 130 determines whether or not a predetermined number of times has been reached (step S408). In a case where it is determined that the predetermined number of times has not been reached (No in step S408), the controller 130 returns the processing to step S407 described above and continues the processing. When the controller 130 determines that the predetermined number of times has been reached (Yes in step S408), the processing proceeds to step S409.

The controller 130 vertically inverts the point cloud data 123 (step S409). For example, the controller 130 inverts the sky side and the underground side of the point clouds 123P (road surface 5000) indicated by the point cloud data 123. When the processing of step S409 is completed, the controller 130 advances the processing to step S410.

The controller 130 reflects the external force (gravity) on the virtual cloth 40 (step S410). For example, as illustrated in FIG. 9, the controller 130 performs processing of covering the cloth lattice point 400 of the virtual cloth 40 on the point cloud data 123 obtained by vertically inverting the point clouds 123P and the pseudo point clouds 123S in the same manner as in step S404 described above. Returning to FIG. 6, when the processing of step S410 is completed, the controller 130 advances the processing to step S411.

The controller 130 reflects the internal force (tensile force) on the virtual cloth 40 (step S411). For example, the controller 130 reflects the pulling force between the plurality of cloth lattice points 400 of the virtual cloth 40, similarly to the step S405 described above. As a result, the controller 130 obtains a result that the cloth lattice points 400 of the virtual cloth 40 from the other side (underground side) are not attached to the point clouds 123P, that is, not attached to the road surface 5000 indicated by the point clouds 123P. When the processing of step S411 is completed, the controller 130 advances the processing to step S412.

The controller 130 determines whether or not a predetermined number of times has been reached (step S412). For example, as in step S408 described above, when the controller 130 determines that the predetermined number of times has not been reached (No in step S412), the controller 130 returns the processing to step S410 described above and continues the processing. When the controller 130 determines that the predetermined number of times has been reached (Yes in step S412), the processing proceeds to step S413.

The controller 130 attaches a portion of the virtual cloth 40 that has not been attached to the road surface 5000 and that has no difference in height from the already attached portion (step S413). The controller 130 performs the same determination as in step S407 described above and stores the processing result for the sky side of the road surface 500 in the storage 120, and the processing proceeds to step S414.

The controller 130 determines whether or not a predetermined number of times has been reached (step S414). In a case where it is determined that the predetermined number of times has not been reached (No in step S414), the controller 130 returns the processing to step S413 described above and continues the processing. When the controller 130 determines that the predetermined number of times has been reached (Yes in step S414), the controller 130 completes the processing procedure illustrated in FIG. 6 and returns to step S400 illustrated in FIG. 3, and the processing proceeds to step S500.

The controller 130 determines unevenness (step S500). For example, the controller 130 determines the unevenness using the determination condition with respect to the point clouds 123P of the point cloud data 123. The determination condition includes a condition that the point clouds are determined to be the road surface 5000 when the difference in height between the virtual cloth 40 on the sky side and the virtual cloth 40 on the underground side is equal to or less than a specified value, and the point clouds are determined to be either a recess or a protrusion when the difference in height between the virtual cloth 40 on the sky side and the virtual cloth 40 on the underground side is not equal to or less than the specified value. Then, after clustering the point clouds 123P separated from the road surface 5000, the controller 130 determines each cluster of a recess, a protrusion, or the like by the following processing. The cluster is, for example, a set of points of a recess, a protrusion, and the like which are not determined to be the road surface 5000 in the point clouds 123P. The controller 130 determines that the unevenness is a protruding portion in a case where the virtual cloth 40 on the sky side has been attached and the number of virtual cloths 40 on the underground side that have not been attached is equal to or greater than half. The controller 130 determines that the unevenness is a recessed portion 5100a in a case where the virtual cloth 40 on the sky side is not attached and the number of virtual cloths 40 on the underground side that are attached is equal to or greater than half. An example of the unevenness determination processing will be described below.

As illustrated in FIG. 10, the controller 130 acquires the results of the cloth simulation from two directions (step S501). For example, the controller 130 acquires a result of executing the cloth simulation from two directions of the sky side and the underground side with respect to the road surface 5000 in step S400 described above. Then, the controller 130 executes separation loop processing of the road surface 5000 and the unevenness (step S502). The separation loop processing of the road surface 5000 and the unevenness is, for example, loop processing of separating all the point clouds of the point cloud data 123 into the road surface 5000 and the unevenness. The completion condition of the separation loop processing of the road surface 5000 and the unevenness includes, for example, execution for all point clouds. When the separation loop processing of the road surface 5000 and the unevenness is executed, the controller 130 determines whether or not a height difference of the virtual cloth 40 in two directions is equal to or greater than a specified value (step S503). For example, the controller 130 calculates the difference in height between the cloth lattice points 400 of the two virtual cloths 40, and compares the difference in height with a specified value. When the controller 130 determines that the height difference is equal to or greater than the specified value (Yes in step S503), the processing proceeds to step S504.

The controller 130 determines that the point clouds 123P are either a recess or a protrusion (step S504). For example, the controller 130 determines that the point clouds 123P to be extracted are any one of unevennesses, and associates data capable of identifying unevenness with the point clouds 123P. In a case where the processing of step S504 is completed and the completion condition of the separation loop processing between the road surface 5000 and the unevenness of step S502 is not satisfied, the controller 130 continues the separation loop processing between the road surface 5000 and the unevenness with respect to the next point cloud 123P. In a case where the processing of step S504 is completed and the completion condition of the separation loop processing of the road surface 5000 and the unevenness of step S502 is satisfied, the controller 130 advances the processing to step S506 which will be described below.

In a case where it is determined in step S503 that the difference in height of the virtual cloth 40 between the two directions is not equal to or greater than the specified value (No in step S503), the controller 130 advances the processing to step S505. The controller 130 determines that the point cloud 123P is the road surface 5000 (step S505). For example, the controller 130 determines that the point cloud 123P to be extracted is the road surface 5000, and associates data capable of identifying the road surface 5000 with the point clouds 123P. In a case where the processing of step S505 is completed and the completion condition of the separation loop processing between the road surface 5000 and the unevenness of step S502 is not satisfied, the controller 130 continues the separation loop processing between the road surface 5000 and the unevenness with respect to the next point cloud 123P. In a case where the processing of step S505 is completed and the completion condition of the separation loop processing of the road surface 5000 and the unevenness of step S502 is satisfied, the controller 130 advances the processing to step S506 which will be described below.

The controller 130 performs clustering on the point clouds determined as the unevenness (step S506). For example, the controller 130 performs clustering on the uneven point clouds 123P based on the separation result of the separation loop processing of the road surface 5000 and the unevenness of the step S502. When the processing of step S506 is completed, the controller 130 advances the processing to step S507.

The controller 130 executes loop processing for determining whether a cluster is a recess or a protrusion (step S507). The loop processing of determining whether a cluster is a recess or a protrusion is, for example, loop processing of determining the point clouds 123P of the clustered uneven cluster. The completion condition of the loop processing of determining whether a cluster is a recess or a protrusion includes, for example, execution for all clusters. The controller 130 determines whether or not the number of points at which the virtual cloth 40 on the sky side has been attached and the virtual cloth 40 on the underground side has not been attached is equal to or greater than half (step S508). For example, the controller 130 determines whether or not the number of points at which the virtual cloth 40 on the sky side has been attached and the virtual cloth 40 on the underground side has not been attached is equal to or greater than half based on the contact state between the point clouds 123P of the clustered uneven clusters and the cloth lattice points 400. In a case where it is determined that the number of points at which the virtual cloth 40 on the sky side is attached and the virtual cloth 40 on the underground side is not attached is equal to or greater than half (Yes in step S508), the controller 130 advances the processing to step S509.

The controller 130 determines that the cluster is a protrusion (step S509). For example, when it is determined that the cluster is a protrusion, the controller 130 associates information indicating that the cluster is determined to be a protrusion with the point cloud data 123. In a case where the processing of step S509 is completed and the completion condition of the loop processing of determining whether the cluster is a recess or a protrusion in step S507 is not satisfied, the controller 130 continues the loop processing of determining whether the cluster is a recess or a protrusion for the next cluster. In a case where the processing of step S509 is completed and the completion condition of the loop processing of determining whether the cluster is a recess or a protrusion in step S507 is satisfied, the controller 130 completes the processing procedure illustrated in FIG. 10, returns to step S500 illustrated in FIG. 3, and advances the processing to step S600.

In a case where it is determined that the number of points at which the virtual cloth 40 on the sky side is attached and the virtual cloth 40 on the underground side is not attached is less than half in step S508 (No in step S508), the controller 130 advances the processing to step S510. The controller 130 determines whether or not the number of points at which the virtual cloth 40 on the sky side is not attached and the virtual cloth 40 on the underground side is attached is equal to or greater than half (step S510). For example, the controller 130 determines whether or not the number of points at which the virtual cloth 40 on the sky side is not attached and the virtual cloth 40 on the underground side is attached is equal to or greater than half based on the contact state between the point clouds 123P of the clustered uneven clusters and the cloth lattice points 400.

In a case where it is determined that the number of points at which the virtual cloth 40 on the sky side is not attached and the virtual cloth 40 on the underground side is attached is equal to or greater than half (Yes in step S510), the controller 101 advances the processing to step S511. The controller 130 determines that the cluster is a recess (step S511). For example, when it is determined that the cluster is a recess, the controller 130 associates information indicating that the cluster is determined to be a recess with the point cloud data 123. In a case where the processing of step S511 is completed and the completion condition of the loop processing of determining whether the cluster is a recess or a protrusion in step S507 is not satisfied, the controller 130 continues the loop processing of determining whether the cluster is a recess or a protrusion for the next cluster. In a case where the processing of step S511 is completed and the completion condition of the loop processing of determining whether the cluster is a recess or a protrusion in step S507 is satisfied, the controller 130 completes the processing procedure illustrated in FIG. 10, returns to step S500 illustrated in FIG. 3, and advances the processing to step S600.

In a case where it is determined that the number of points at which the virtual cloth 40 on the sky side is not attached and the virtual cloth 40 on the underground side is attached is not equal to or greater than half in step S510 (No in step S510), the controller 130 advances the processing to step S512. The controller 130 determines that the cluster is abnormal (step S512). For example, when it is determined that the cluster is abnormal, the controller 130 associates information indicating that the cluster is determined to be abnormal with the point cloud data 123. In a case where the processing of step S512 is completed and the completion condition of the loop processing of determining whether the cluster is a recess or a protrusion in step S507 is not satisfied, the controller 130 continues the loop processing of determining whether the cluster is a recess or a protrusion for the next cluster. In a case where the processing of step S512 is completed and the completion condition of the loop processing of determining whether the cluster is a recess or a protrusion in step S507 is satisfied, the controller 130 completes the processing procedure illustrated in FIG. 10, returns to step S500 illustrated in FIG. 3, and advances the processing to step S600.

The controller 130 provides provision data 125 indicating the unevenness determination result (step S600). For example, the controller 130 generates the provision data 125 capable of identifying the recessed portion 5100a and the protruding portion 5200 of the point cloud data 123, and executes the provision processing of the provision data 125. The provision processing includes, for example, processing of providing (transmitting) the data to the mobile body 1000 via the communicator 110, processing of providing (transmitting) the data to another electronic device via the communicator 110, and processing of displaying the data on the display device via the communicator 110.

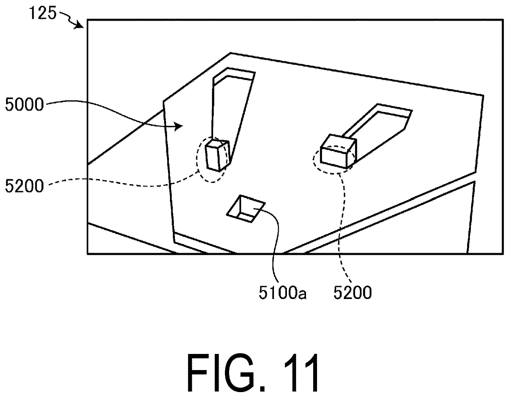

FIG. 11 is a diagram illustrating an example of the provision data 125 of the electronic device 100 according to the embodiment. As illustrated in FIG. 11, the controller 130 generates the provision data 125 indicating a result of determining the unevenness with respect to the point cloud data 123 illustrated in FIG. 4. The provision data 125 is data capable of identifying the determination results of the road surface 5000, the recessed portion 5100a, and the protruding portion 5200. The controller 130 provides the provision data 125 capable of identifying the recessed portion 5100a and the protruding portion 5200 on the road surface 5000, so the improvement of the accuracy of detecting the surrounding recessed portion 5100a can be supported. As a result, the electronic device 100 enables the mobile body 1000 to accurately recognize the recessed portion 5100a of the road surface 5000 and move while avoiding the recessed portion 5100a, and thus can support improvement in security. The electronic device 100 can accurately detect the recessed portion 5100a and the protruding portion 5200 even on the road surface 5000 on which the mobile body 1000 is not traveling, which can contribute to improvement in security.

Returning to FIG. 3, when the processing of step S600 is completed, the controller 130 determines whether or not to complete the processing (step S700). For example, the controller 130 determines to complete the processing when a completion instruction is received or when it is the completion timing. When the controller 130 determines not to complete the processing (No in step S700), the controller 130 returns the processing to step S100 described above and continues the processing. When the controller 130 determines to complete the processing (Yes in step S700), the processing procedure illustrated in FIG. 3 is completed.

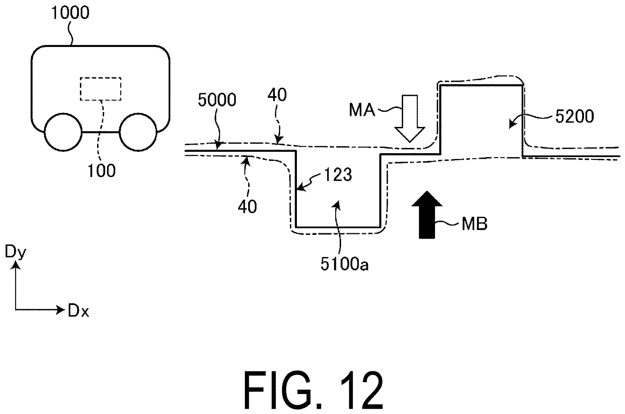

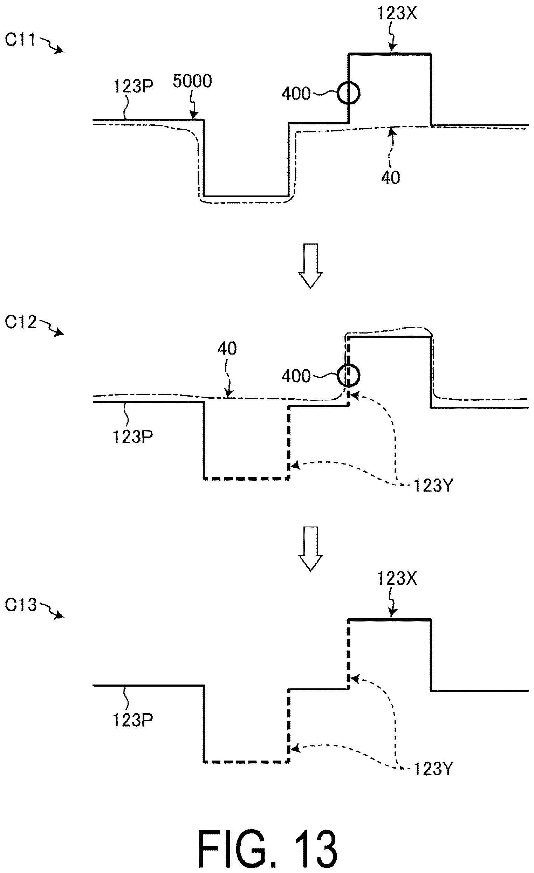

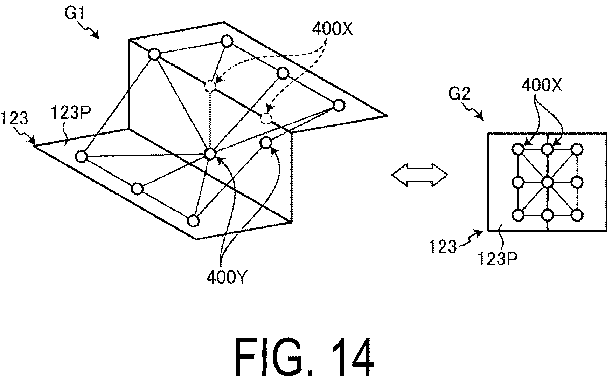

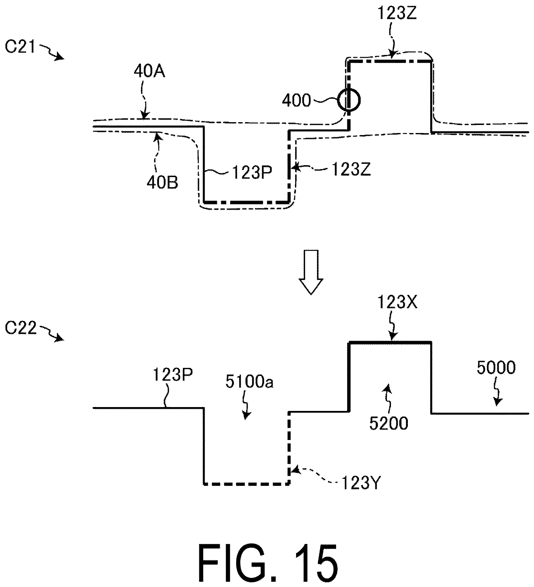

FIG. 12 is a diagram for explaining an unevenness detection example of the point cloud data 123 of the electronic device 100 according to the embodiment. FIG. 13 is a diagram for explaining an example of processing the cloth simulation illustrated in FIG. 12 is processed for each virtual cloth. FIG. 14 is a diagram for explaining an erroneous determination of unevenness in FIG. 13. FIG. 15 is a diagram for explaining an example of processing the cloth simulation illustrated in FIG. 12 for each virtual cloth.

It is assumed that the electronic device 100 has acquired point cloud data 123 as illustrated in FIG. 12. The point cloud data 123 includes the point cloud 123P capable of identifying the state of the road surface 5000 including the recessed portion 5100a and the protruding portion 5200 of the road surface 5000. In this case, the electronic device 100 brings the virtual cloth 40 close to the point cloud data 123 from the sky side MA and the underground side MB so as to cover the point cloud data 123.

First, a case where the electronic device 100 covers the point cloud data 123 with each virtual cloth 40 will be described. In the scene C11 in FIG. 13, the electronic device 100 determines that the point cloud 123X of the point cloud data 123 is a protrusion based on the cloth lattice points 400 by the cloth simulation in which the virtual cloth 40 is covered from the underground side MB. Then, in the scene C12, the electronic device 100 determines that the point cloud 123Y of the point cloud data 123 is a recess based on the cloth lattice points 400 by the cloth simulation in which the virtual cloth 40 is covered from the sky side MA. Then, in the scene C13, the electronic device 100 detects one protrusion and two recesses as a result of clustering the point cloud 123X and the point cloud 123Y.

A scene G1 in FIG. 14 illustrates a perspective view of the point cloud data 123, and a scene G2 illustrates an upper surface of the point cloud data 123. As illustrated in FIG. 14, when the cloth lattice points 400X of the virtual cloth 40 are set in the boundary portion between the recess and the protrusion of the point cloud data 123, in practice, the cloth lattice points 400X may not have an expected height due to a difference in the coordinate values of the minute point cloud 123P like the cloth lattice points 400Y. When the virtual cloth 40 is put on the point cloud data 123 in this state from the upper side, the virtual cloth 40 in the central portion floats. As a result, the determination condition for a recess is satisfied, and the point clouds 123P that should be determined to be a protrusion may be determined to be a recess.

In the example illustrated in FIG. 15, the electronic device 100 covers the point cloud data 123 with two sheets of virtual cloth 40 at the same time. In the scene C21 in FIG. 15, the electronic device 100 temporarily determines that the point cloud 123Z of the point cloud data 123 is the unevenness based on the cloth lattice points 400 by the cloth simulation in which the two sheets of the virtual cloth 40 are made to cover from the sky side MA and the underground side MB. Then, in the scene C22, the electronic device 100 performs clustering on the point clouds 123P, and determines the point clouds 123P having a larger number of temporary determinations as the unevenness in the cluster to be the unevenness.

As described above, the electronic device 100 can perform clustering on the point clouds 123P based on the shape of the virtual cloth 40 when the virtual cloth 40 is put on the point cloud dataset 123 from two directions with a predetermined gravity, and can determine the unevenness of the point clouds 123P based on the number of unevenness determinations of the clustered point clouds 123P. As a result, the electronic device 100 can extract the recess without being affected by the road surface condition by separating the point cloud data 123 into the road surface 5000 and the unevenness and discriminating them. As a result, the electronic device 100 can improve the accuracy of detecting unevenness from an image by increasing the accuracy of determination at the edge of unevenness or the like.

The electronic device 100 clusters the point cloud 123P other than the points determined to be the road surface 5000 into uneven clusters. Accordingly, the electronic device 100 can separate the point cloud 123P into the clusters of the road surface 5000 and the unevenness, and thus can determine the unevenness without being affected by the state of the road surface 5000.

The electronic device 100 can determine whether the clustered uneven cluster is a protrusion or a recess based on the attachment state between the point cloud 123P and the virtual cloth 40 from two directions. Accordingly, the electronic device 100 can suppress missing or erroneous determination by using the results of the cloth simulation from the two directions, and thus can determine the unevenness without being affected by the state of the road surface 5000.

In the present embodiment, the case where the electronic device 100 complements the point cloud data 123 with the pseudo point clouds 123S has been described, but the configuration is not limited thereto. For example, the electronic device 100 can obtain the above-described operation and effect by executing the cloth simulation from two directions even for the point cloud data 123 that does not include the missing part 123D.

In the present embodiment, the case where the electronic device 100 is mounted on the mobile body 1000 has been described, but the configuration is not limited thereto. For example, the electronic device 100 may be realized by a server, a roadside device, or the like outside the mobile body 1000.

Characteristic embodiments have been described in order to fully and clearly disclose the technology according to the appended claims. However, the appended claims should not be limited to the above-described embodiments, and should be configured to embody all variations and alternative configurations that can be created by those skilled in the art within the scope of the basic matters indicated in the present specification. Those skilled in the art can make various changes and modifications to the contents of the present disclosure based on the present disclosure. Therefore, these variations and modifications fall within the scope of the present disclosure. For example, in each embodiment, each functional unit, each means, each step, or the like can be added to another embodiment or can be replaced with each functional unit, each means, each step, or the like of another embodiment so as not to be logically inconsistent. In each embodiment, a plurality of functional units, means, steps, and the like can be combined into one or divided. The above-described embodiments of the present disclosure are not limited to implementations faithful to the embodiments described above, and may be implemented by appropriately combining the features or omitting some of the features. In a device including a CPU and a memory, the method of the present disclosure may be implemented by the CPU performing a program stored in the memory.

### REFERENCE SIGNS

100 Electronic device
110 Communicator
120 Storage
121 Program
122 Cloth simulation
123 Point cloud data
123D Missing part
123P Point cloud
123S Pseudo point cloud
124 Posture data
125 Provision data
130 Controller
131 Acquiring unit
132 Discriminator
133 Complementor
134 Cloth simulation unit
135 Clustering unit
136 Determiner
137 Provider
200 Detector
310 Detection range
320 Climbable angle
330 Minimum altitude
400 Cloth lattice point
1000 Mobile body
5000 Road surface
5100 Slope
5 100a Recessed portion
5200 Protruding portion

## Claims

1. An electronic device comprising:
an acquiring unit configured to acquire point cloud data corresponding to points on a road surface;
a cloth simulation unit configured to output a shape of a point cloud indicated by the point cloud data determined based on a shape of a virtual cloth when the virtual cloth having a predetermined tensile force is put on the point cloud data with a predetermined gravity;
a clustering unit configured to perform clustering on the point cloud based on the shape of the point cloud; and
a determiner configured to determine unevenness of the clustered point cloud, wherein
the cloth simulation unit is configured to determine the shape of the point cloud based on a distance between a first cloth lattice point when the virtual cloth is put on the point cloud data from a first direction and a second cloth lattice point when the virtual cloth is put on the point cloud data from a second direction opposite to the first direction,
the clustering unit is configured to perform clustering on the point cloud other than a point determined to be the road surface, and
the determiner is configured to determine the unevenness of the point cloud based on the number of unevenness determinations assigned to the clustered point cloud.

2. The electronic device according to claim 1, wherein
the clustering unit is configured to perform clustering on the point cloud other than points determined to be the road surface into an uneven cluster.

3. The electronic device according to claim 2, wherein
the determiner is configured to determine whether the clustered uneven cluster is a protrusion or a recess based on an attachment state between the point cloud and the virtual cloth from two directions.

4. The electronic device according to claim 3, further comprising
a provider configured to provide provision data capable of identifying the unevenness of the road surface determined by the determiner.

5. The electronic device according to claim 4, wherein
the acquiring unit is configured to acquire the point cloud data based on a depth image obtained by a detector mounted on a mobile body measuring the road surface, and
the provider is configured to provide the provision data to the mobile body.

6. A control method comprising:
by an electronic device,
acquiring point cloud data corresponding to points on a road surface;
performing a cloth simulation for outputting a shape of a point cloud indicated by the point cloud data determined based on a shape of a virtual cloth when the virtual cloth having a predetermined tensile force is put on the point cloud data with a predetermined gravity;
performing clustering on the point cloud based on the shape of the point cloud; and
determining unevenness of the clustered point cloud, wherein
the cloth simulation comprises determining the shape of the point cloud based on a distance between a first cloth lattice point when the the virtual cloth is put on the point cloud data from a first direction and a second cloth lattice point when the virtual cloth is put on the point cloud data from a second direction opposite to the first direction,
the clustering comprises performing clustering on the point cloud other than points determined to be the road surface, and
the determining comprises determining the unevenness of the point cloud based on the number of unevenness determinations assigned to the clustered point cloud.

7. A control program, causing an electronic device to execute:
acquiring point cloud data corresponding to points on a road surface;
performing a cloth simulation for outputting a shape of a point cloud indicated by the point cloud data determined based on a shape of a virtual cloth when the virtual cloth having a predetermined tensile force is put on the point cloud data with a predetermined gravity;
performing clustering on the point cloud based on the shape of the point cloud; and
determining unevenness of the clustered point cloud, wherein
the cloth simulation causes the electronic device to determine the shape of the point cloud based on a distance between a first cloth lattice point when the virtual cloth is put on the point cloud data from a first direction and a second cloth lattice point when the virtual cloth is put on the point cloud data from a second direction opposite to the first direction,
the clustering causes the electronic device to perform clustering on the point cloud other than points determined to be the road surface, and
the determining causes the electronic device to determine the unevenness of the point cloud based on the number of unevenness determinations assigned to the clustered point cloud.
